# EUROPÄISCHE PATENTSCHRIFT

(11) **EP 2 529 463 B1**
(45) Veröffentlichungstag und Bekanntmachung des Hinweises auf die Patenterteilung: **01.05.2019**
(21) Anmeldenummer: 10800949.9
(22) Anmeldetag: 29.12.2010
(51) Int. Cl.: H02J 7/00

(54) **WIEDERANLAUFSCHUTZ FÜR BATTERIEBETRIEBENE ELEKTROGERÄTE**
RESTART PROTECTION FOR BATTERY-POWERED ELECTRICAL APPLIANCES
PROTECTION CONTRE LA REMISE SOUS TENSION POUR DES APPAREILS ÉLECTRIQUES FONCTIONNANT AVEC BATTERIE

(30) Priorität: 29.01.2010 DE 102010001372
(43) Veröffentlichungstag der Anmeldung: 05.12.2012
(73) Patentinhaber: Robert Bosch GmbH, 70442 Stuttgart (DE)
(72) Erfinder: KOEDER, Thilo, 70839 Gerlingen (DE); SCHMID, Markus, 72649 Wolfschlugen (DE)
(86) Internationale Anmeldenummer: PCT/EP2010/070862
(87) Internationale Veröffentlichungsnummer: WO 2011/091935

(56) Entgegenhaltungen:
- EP-A1- 2 106 885
- FR-A1- 2 613 270
- US-A1- 2002 100 597

## Beschreibung

Die Erfindung betrifft ein Schutzsystem für ein mittels eines wechselbaren Batteriepakets betriebenes Elektrogerät Das Schutzsystem verhindert einen unbeabsichtigten Wiederanlauf des Elektrogeräts nach einem Wechsel des Batteriepakets. Die Erfindung betrifft ferner ein Elektrogerät mit einem solchen Schutzsystem.

### Stand der Technik

Elektrisch betriebene Geräte, wie zum Beispiel eine Handwerkzeugmaschine, müssen zum bestimmungsgemäßen Betrieb mit der dafür notwendigen elektrischen Energie versorgt werden. Für einen netzunabhängigen und damit flexiblen Einsatz solcher Elektrogeräte, kann die Stromversorgung mittels Batterien erfolgen. Bei Handwerkzeugmaschinen werden dazu häufig wiederaufladbare Batterien verwendet, die in Form von kompakten Batteriepaketen ausgebildet sind. Diese auch als Akkupacks bezeichneten Batteriepakete werden abnehmbar in einer entsprechenden Aufnahmeeinrichtung des jeweiligen Gerätes montiert, um ein externes Aufladen beziehungsweise einen Austausch des Batteriepakets zu ermöglichen.

Um das Batteriepaket an das Elektrogerät elektrisch anzuschließen, sind an beiden Teilen zueinander komplementäre Kontaktelemente vorhanden. Die Kontaktelemente bilden dabei Schnittstellen sowohl zur Stromversorgung des Elektrogeräts als auch zum Datenaustausch zwischen Batterie und Elektrogerät. Bei der Batterieinstallation wird das Batteriepaket in die Batterieaufnahme des Elektrogeräts eingeschoben, wodurch die Kontaktelemente der beiden Teile miteinander verbunden werden. Sobald die Hauptkontakte des Batteriepakets mit den Hauptkontakten am Elektrogerät kontaktieren, ist die Stromversorgung des Elektrogeräts hergestellt Sofern der Hauptschalter des Elektrogeräts zu diesem Zeitpunkt bereits eingeschaltet ist, wird das Elektrogerät beim Installieren des Batteriepakets aktiviert, was zu einem unerwünschten Wiederanlaufen des Elektrogeräts führen kann. Ferner kann es bei diesem herkömmlichen Elektrogerät durch Funkenbildung zu typischen Abnutzungserscheinungen an den Kontaktelementen kommen, da die Kontaktierung der Hauptkontakte bei eingeschaltetem Hauptschalter nicht stromlos erfolgt.

Aus der EP 2 1106 885 A1 ist ein batteriebetriebenes Elektrowerkzeug bekannt, bei welchem die Stromversorgung während der Installation des Batteriepakets unterbrochen wird, um das Anlaufen des Elektrowerkzeugs bei nicht richtig installiertem Batteriepaket zu verhindern. Hierzu weist das Batteriepaket eine entsprechende Einrichtung auf, welche die elektrische Verbindung zwischen den Batteriezellen und den Stromkontakten des Batteriepakets erst dann freigibt, wenn das Batteriepaket in der endgültigen Position einrastet.

### Offenbarung der Erfindung

Aufgabe der Erfindung ist es, bei einem mittels eines Batteriepakets betriebenen Elektrogerät einen ungewollten Wiederanlauf nach einem Wechsel des Batteriepakets zu verhindern. Diese Aufgabe wird durch ein Schutzsystem gemäß Anspruch 1 gelöst. Ferner wird die Aufgabe durch ein Elektrogerät nach Anspruch 12 gelöst, welches ein solches Schutzsystem umfasst. Weitere vorteilhafte Ausführungsformen der Erfindung sind in den untergeordneten Ansprüchen angegeben.

Gemäß der Erfindung ist ein Schutzsystem für ein mittels eines installierbaren Batteriepakets betriebenes Elektrogerät umfassend eine Steuereinrichtung vorgesehen, wobei die Steuereinrichtung ausgebildet ist, das Elektrogerät zu aktivieren, sofern ein Hauptschalter bei installiertem Batteriepaket betätigt wird. Dabei umfasst das Elektrogerät eine Kontakteinrichtung mit mehreren Kontaktelementen, die beim Installieren des Batteriepakets entsprechende Kontaktelemente einer Kontakteinrichtung des Batteriepakets kontaktieren, um eine Stromverbindung und eine Kommunikationsverbindung zwischen Elektrogerät und Batteriepaket herzustellen, wobei die Stromverbindung mit Hilfe zueinander komplementärer erster Kontaktelemente und die Kommunikationsverbindung mit Hilfe zu. einander komplementärer zweiter Kontaktelemente gebildet werden. Dabei sind die Kontakteinrichtungen ausgebildet, beim Installieren des Batteriepakets die Stromverbindung zeitlich vor der Kommunikationsverbindung herzustellen. Die Steuereinrichtung hingegen ist ausgebildet, die Aktivierung des Elektrogeräts zu unterdrücken, sofern bei betätigtem Schalter die Stromverbindung zeitlich vor der Kommunikationsverbindung hergestellt wird. Hierdurch wird ein wirksamer Wiederanlaufschutz realisiert, der ein versehentliches Wiederanlaufen des Elektrogerätes nach einem Batteriewechsel ver hindert Ferner wird hierdurch die Funkenbildung verhindert, die beim Einstecken des Batteriepakets an eine eingeschaltete Maschine üblicherweise entstehen. Hierdurch werden die Kontakte des Batteriepakets und des Elektrogerätes wirkungsvoll vor Abnutzung geschützt.

In einer ersten Ausführungsform ist vorgesehen, dass die Steuereinrichtung ausgebildet ist, das Elektrogerät zu deaktivieren, sofern bei betätigtem Hauptschalter die zweite elektrische Verbindung zeitlich vor der ersten elektrischen Verbindung getrennt wird. Hierdurch wird eine automatische Abschaltfunktion realisiert, mithilfe der die Leistungselektronik im Falle einer Entnahme bzw. eines Herausfallens des Batteriepakets aus der laufenden Maschine abgeschaltet wird. Da das Ausstecken des Batteriepakets stromlos bzw. leistungslos erfolgt und daher Funkenbildung vermieden wird, werden ferner die Kontakte am Batteriepaket und Elektrogerät wirkungsvoll vor Abnutzung geschützt.

In einer weiteren Ausführungsform der Erfindung ist vorgesehen, dass wenigstens ein Kontaktelement der zweiten Schnittstelle einer Kontakteinrichtung ge genüber den Kontaktelementen der ersten Schnittstelle der jeweiligen Kontakteinrichtung in Einsteckrichtung des Batteriepakets räumlich versetzt angeordnet ist. Hierdurch kann auf eine besonders einfache Weise eine zeitliche Verzögerung bei der Kontaktierung der Kontaktelemente der ersten und zweiten Schnittstelle und damit beim Herstellen der ersten und der zweiten elektrischen Verbindung erreicht werden..

Eine weitere Ausführungsform sieht vor, dass wenigstens ein Kontaktelement der zweiten elektrischen Schnittstelle einer Kontakteinrichtung kürzer als die Kontaktelemente der ersten Schnittstelle der entsprechenden Kontakteinrichtung ausgebildet ist. Auch mithilfe dieser alternativen Maßnahme kann eine Verzöger beim Aufbau der beiden elektrischen Verbindungen unabhängig von der Einsteckgeschwindigkeit des Batteriepakets erfolgt.

In einer weiteren Ausführungsform ist eine mechanische Freigabeeinrichtung vorgesehen, die ausgebildet ist, durch welche wenigstens ein Kontaktelement der zweiten elektrischen Verbindung mechanisch blockiert wird, sobald das Batteriepaket deinstalliert wird. Dabei ist die mechanische Freigabeeinrichtung ausgebildet, das blockierte Kontaktelement zeitlich verzögert nach dem Herstellen der ersten elektrischen Verbindung freizugeben. Durch die mechanische Blockade der Kontaktelemente kann die Kontaktierungsreihenfolge auf eine besonders einfache und wirkungsvolle Weise sichergestellt werden. Ferner lässt sich hierdurch ein mechanischer Schutz freiliegender bzw. exponierter Kontaktelemente im Falle des deinstallierten Batteriepakets realisieren.

In einer weiteren Ausführungsform ist eine elektrische Freigabeeinrichtung vorgesehen, die wenigstens einen Kontaktelement der zweiten elektrischen Verbindung elektrisch blockiert, sobald das Batteriepaket deinstalliert wird. Die elektrische Freigabeeinrichtung ist dabei ausgebildet, das blockierte Kontaktelement zeitlich verzögert nach dem Herstellen der ersten elektrischen Verbindung freizugeben. Auch diese alternative Maßnahme ermöglicht eine ausreichende zeitliche Verzögerung beim Herstellen der beiden elektrischen Verbindungen.

Gemäß einer weiteren Ausführungsform umfasst die elektrische Freigabeeinrichtung wenigstens einen Schalter, der den Stromkreis der zweiten elektrischen Verbindung beim Deinstallieren des Batteriepakets unterbricht. Mithilfe des Schalters kann der Aufbau der zweiten elektrischen Verbindung unabhängig von der Kontaktierung der Kontaktelemente erfolgen. Insbesondere lässt sich, wie in einer weiteren Ausführungsform der Fall, der Schalter mithilfe eines Verriegelungsmechanismus betätigen, der zum Sichern des Batteriepakets am Gehäuse des Elektrogeräts dient. Da der Verriegelungsmechanismus üblicherweise erst nach dem vollständigen Einschieben des Batteriepakets in die entsprechende Aufnahmeeinrichtung betätigt wird, ist damit sichergestellt, dass die zweite elektrische Verbindung zeitlich verzögert nach der ersten elektrischen Verbindung hergestellt wird.

Es ist vorgesehen, dass die Stromverbindung der Energieversorgung des Elektrogeräts durch das Batteriepaket dient, während die Kommunikationsverbindung als eine Kommunikationsverbindung zwischen dem Batteriepaket und dem Elektrogerät ausgebildet ist. Bei dem durch die Installation des Batteriepakets in Gang gesetzten Initialisierungsvorgang der Steuereinrichtung kann anhand einer dabei ohnehin erfolgenden Abfrage der Kommunikationsschnittstelle festgestellt werden, dass die Batterie bei eingeschaltetem Hauptschalter installiert wurde. Damit lässt sich das erfindungsgemäße Konzept ohne großen Aufwand in bestehende Elektrogeräte implementieren.

Schließlich ist die Steuereinrichtung gemäß einer weiteren Ausführungsform ausgebildet, das Elektrogerät zu aktivieren, sofern der Schalter erneut betätigt wird, nachdem die Aktivierung des Elektrogeräts beim Installieren des Batteriepakets unterdrückt wurde. Hierdurch kann sichergestellt werden, dass nur ein vom Benutzer vorgenommenes und damit auch gewolltes Aktivieren des Elektrogeräts auch tatsächlich zu seinem Anlauf führt.

Im Folgenden wird die Erfindung anhand von Zeichnungen näher beschrieben. Es zeigen:
Fig. 1 beispielhaft ein erfindungsgemäßes Elektrogerät mit einem installiertem Batteriepaket;
Fig. 2 schematisch ein erfindungsgemäßes Schutzsystem des Elektrogerätes aus Figur 1;
Fig. 3 ein erstes Ausführungsbeispiel einer erfindungsgemäßen Kontaktanordnung des Elektrogeräts aus Figur 1 und des zugehörigen Batteriepakets;
Fig. 4 die Kontaktanordnung aus Figur 3 während des Installationsvorgangs des Batteriepakets;
Fig. 5 die Kontaktelementanordnung aus den Figuren 3 und 4 beim installierten Batteriepaket;
Fig. 6 bis 8 weitere Ausführungsbeispiele erfindungsgemäßer Kontaktordnungen mit jeweils unterschiedlich ausgebildeten Kontaktelementen;

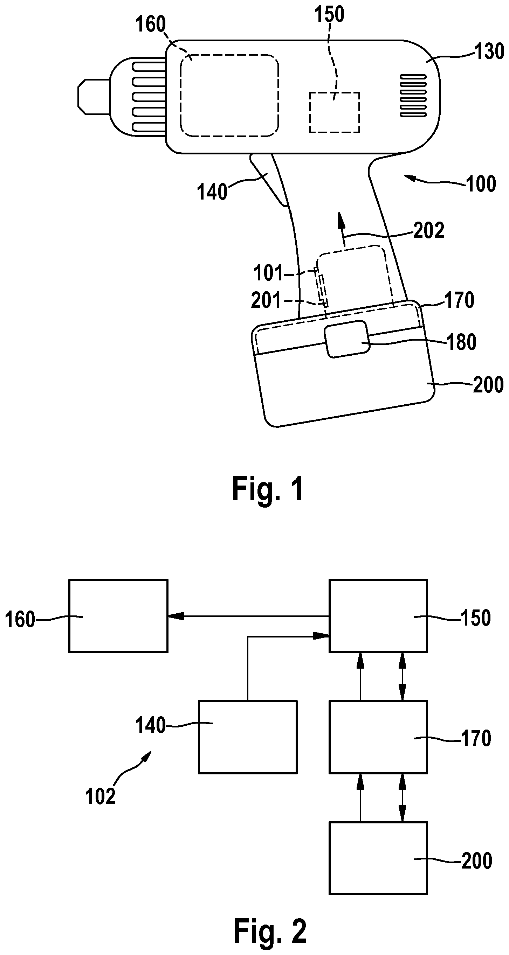

Die **Figur 1** zeigt ein erfindungsgemäßes Elektrogerät 100, das mittels eines installierbaren Batteriepakets 200 betrieben wird. Das vorzugsweise als Handwerkzeugmaschine, wie zum Beispiel Akkuschrauber, Akkubohrer oder ähnliche Maschine, ausgebildete Elektrogerät 100 weist ein Gehäuse 130 auf, in welchem ein Leistungsteil 160 - im vorliegenden Fall ein Elektromotor - untergebracht ist. Ferner umfasst das Elektrogerät 100 eine Steuereinrichtung 150 zur Steuerung des Leistungsteils 160, sowie einen Hauptschalter 140 in Form eines Bedienelements zum Aktivieren des Elektrogeräts 100. Die Stromversorgung des Elektrogeräts 100 erfolgt über ein Batteriepaket 100, welches am beziehungsweise im Gehäuse 130 des Elektrogeräts 100 installiert ist. Um einen einfachen Batteriewechsel zu ermöglichen, ist das Batteriepaket 200 vorzugsweise leicht abnehmbar am Gehäuse 130 angebracht. Im vorliegenden Beispiel ist hierfür eine spezielle Aufnahmevorrichtung 170 im unteren Bereich eines als Haltegriff dienenden Gehäuseteils des Akkuschraubers 100 angeordnet. Die Installation des Batteriepaket 200 erfolgt durch Einstecken in die entsprechende Aufnahmeeinrichtung 170, wobei im vorliegenden Beispiel ein vorderer Teil des Batteriepakets 200, der eine Kontakteinrichtung 201 umfasst, in der mittels eines Pfeils angedeuteten Einschubrichtung 202 in den durch den Handgriff des Elektrowerkzeugs 100 gebildeten Schafft eingeschoben wird. Entsprechend wird das Batteriepaket 200 im Rahmen eines Batteriewechsels aus der Aufnahmeeinrichtung 170 entnommen, wobei der vordere Teil des Batteriepaketes 200 in der entgegengesetzten Richtung aus dem schaftförmigen Handgriff herausgezogen wird. Zum Anschluss des Batteriepakets 200 am Elektrogerät 100 umfasst die Aufnahmeeinrichtung 170 ebenfalls eine Kontakteinrichtung 101. Jede der beiden Kontakteinrichtungen 101, 201 umfasst dabei mehrere Kontaktelemente, die mit entsprechend komplementär geformten Kontaktelementen der Gegenseite zusammenwirken. Die Kontaktelemente einer Kontakteinrichtung 101, 201 bilden jeweils eine erste Schnittstelle zum Herstellen einer Stromverbindung sowie eine zweite Schnittstelle zum Herstellen einer Kommunikationsverbindung. Erfindungsgemäß sind die Kontaktelemente bei wenigstens einer der beider Kontakteinrichtungen 101, 201 so ausgebildet, dass beim Einschieben des Batteriepakets 200 in die Aufnahmeeinrichtung 170 die Kommunikationsverbindung zeitlich verzögert zu der Stromverbindung hergestellt wird.

In der Montageposition wird das Batterieparkett 200 üblicherweise mittels eines Verriegelungsmechanismus 180 gegen Herausfallen aus der Aufnahmeeinrichtung 170 gesichert. Der Verriegelungsmechanismus 180 kann dabei beispielsweise Rastelemente umfassen, die beim Erreichen der Montageposition in entsprechende Hinterschneidungen eingreifen (hier nicht gezeigt).

Die Steuereinrichtung 150 ist ausgebildet, den Elektromotor 160 in Betrieb zu setzen, sofern der Hauptschalter 140 bei installierten Batteriepaket 200 betätigt wird. Um zu verhindern, dass die Maschine 100 mit betätigtem Hauptschalter 140 beim Installieren des Batteriepakets 200 versehentlich anläuft, ist das Elektrogerät 100 mit einem erfindungsgemäßen Schutzsystem 102 ausgestattet. Das Schutzsystem 102 umfasst eine spezielle Kontaktanordnung, bei der durch eine geeignete Ausbildung der Kontaktelemente wenigstens einer der beiden Kontakteinrichtungen 101, 201 eine Verzögerung beim Aufbau der Kommunikationsverbindung gegenüber der Stromverbindung realisiert wird. Ferner umfasst das Schutzsystem 102 eine Steuereinrichtung, welche die Batterieinstallation anhand der Verzögerung beim Aufbau der Kommunikationsverbindung erkennt und in diesem Fall eine Aktivierung des Elektrogeräts 100 unterbindet. Diese Funktion ist im vorliegenden Beispiel innerhalb der Steuereinheit 150 des Elektrogeräts 100 implementiert. Grundsätzlich kann diese Steuerfunktion auch in einer separaten Steuereinheit des Elektrogeräts 100 oder des Batteriepakets 200 realisiert werden.

Eine schematische Darstellung des Schutzsystems 102 ist in der **Figur 2** dargestellt. Hierbei wird deutlich, dass das Batteriepaket 200 über entsprechende Schnittstellen mit der Kontakteinrichtung der Aufnahmeeinrichtung 170 elektrisch verbunden ist. Dabei ist eine erste elektrische Verbindung, die üblicherweise zur Stromversorgung dient und mittels zwei Hauptkontakten am Batteriepaket und am Elektrogerät realisiert ist, mithilfe eines einfachen Pfeils dargestellt. Ferner ist eine zweite elektrische Verbindung, die beispielsweise als bidirektionale Kommunikationsverbindung ausgebildet ist, mithilfe eines entsprechenden Pfeils dargestellt. Die Aufnahmeeinrichtung 170 ist über entsprechende Leitungen mit der Steuereinrichtung 150 verbunden. Über diese Leitungen werden sowohl die Kommunikationssignale als auch die Versorgungsspannung an die Steuereinrichtung 150 weitergegeben. Auch der Hauptschalter 140 ist über entsprechende Leitungen an der Steuereinrichtung 150 angeschlossen, die den aktuellen Schaltzustand des Hauptschalters 140 abfragt. Alternativ kann die Stromversorgung auch über den Hauptschalter an die Steuereinrichtung geleitet werden. Schließlich ist die Steuereinrichtung 150 über entsprechende Leitungen 150 mit der Leistungskomponente 160 des Elektrogeräts 100 elektrisch verbunden, um die Leistungskomponente 160 mittels entsprechender Signale gemäß dem vorgegebenen Betriebszustand anzusteuern.

Um eine Installation des Batteriepakets zu erkennen und im Falle eines aktivierten Hauptschalters 41 die Aktivierung der Leistungseinheit 160 unterbinden zu können, sieht das erfindungsgemäße Konzept eine Verzögerung beim Aufbau der Kommunikationsverbindung gegenüber der Stromverbindung vor. Eine solche Verzögerung kann dabei auf verschiedene Weise erreicht werden. Insbesondere ist eine geeignete Verzögerung durch die spezielle Gestaltung beziehungsweise Anordnung der Kontaktelemente am Elektrogerät 100 und/oder am Batteriepaket 200 möglich.

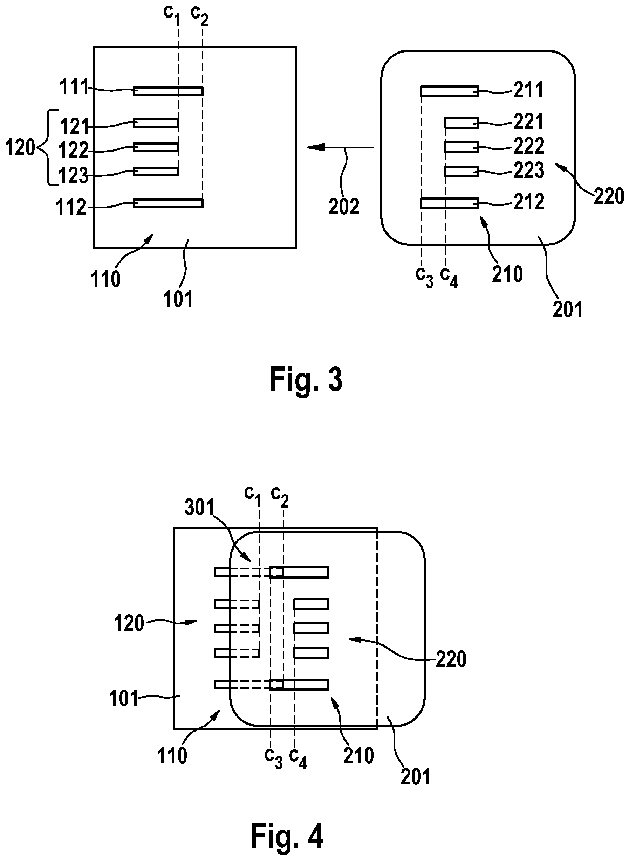

Die **Figur 3** zeigt beispielhaft eine solche Kontaktanordnung, wobei die Kontaktelemente der Kommunikationsverbindung gegenüber den Kontaktelementen der Stromverbindung kürzer ausgebildet sind. Dargestellt sind hierbei die Kontakteinrichtung 101 des Elektrogeräts 100 sowie die hierzu komplementäre Kontakteinrichtung 201 des Batteriepaket 200. Die geräteseitige Kontakteinrichtung 101 umfasst fünf parallel nebeneinander angeordnete Kontaktelemente 111, 112, 121, 122, 123, wobei die beiden äußeren Kontaktelemente 111, 112 die Stromschnittstelle 110 des Elektrogeräts 100 darstellen, während die inneren Kontaktelemente 121, 122, 123 die Kommunikationsschnittstelle 120 des Elektrogeräts 100 bilden. In analoger Weise weist die batterieseitige Kontakteinrichtung 201 fünf parallel nebeneinander angeordnete Kontaktelemente 211, 212, 221, 222, 223 auf, wobei die äußeren Kontaktelemente 211, 212 die Stromversorgungsschnittstelle 210 darstellen, während die inneren Kontaktelemente 221, 222, 223 die Kommunikationsschnittstelle 220 bilden. Im vorliegenden Beispiel sind die Kontaktelemente der geräteseitigen Kommunikationsschnittstelle 120 gegenüber den Kontaktelementen der geräteseitigen Stromschnittstelle 110 kürzer ausgebildet, so dass sich zwei in Bezug auf die Einsteckrichtung 202 gegeneinander versetzte Kontaktlinien c₁, c₂ ergeben. Auch bei der hierzu komplementären Kontakteinrichtung 201 am Batteriepaket 200 sind die Kontaktelemente 221, 222, 223 der Kommunikationsschnittstelle 220 kürzer ausgebildet als die zugehörigen Hauptkontakte 211, 212, so dass sich auch hier zwei in Bezug auf die Einsteckrichtung 202 gegeneinander versetzte Kontaktlinien c₃, c₄ ergeben.

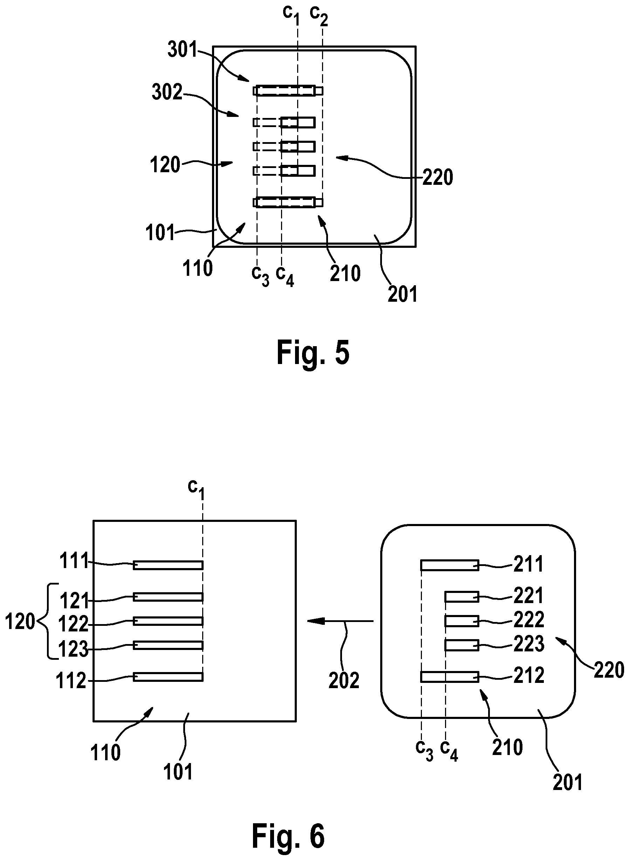

Aufgrund der unterschiedlichen Kontaktlinien der Schnittstellen 110 und 120 sowie 210 und 220 kommen beim Einschieben des Batteriepakets in die Aufnahmeeinrichtung zunächst die längeren Kontaktelemente der beiden Stromschnittstellen 110, 210 miteinander in Berührung. Dies ist in der Figur 4 gezeigt. Sobald die Stromversorgung des Elektrogeräts hergestellt ist, beginnt die Steuereinrichtung 150 mit einer Startup-Prozedur, bei der auch die Kommunikationsschnittstelle 120 abgefragt wird. Da die Kommunikationsverbindung zu diesem Zeitpunkt noch nicht hergestellt ist, liegen die gemessenen Signale außerhalb des vorgegebenen Bereichs, was von der Steuereinrichtung 150 als Fehler bewertet wird. In diesem Fall unterdrückt die Steuereinrichtung 150 die Aktivierung der Maschine 100, sofern der Hauptschalter 140 zu diesem Zeitpunkt getätigt wird beziehungsweise bereits eingeschaltet ist. Da die Leistungselektronik nicht angesteuert wird, setzt sich der Elektromotor 160 der Maschine 100 nicht in Bewegung. Um einen wirksamen Wiederanlaufschutz zu gewährleisten, ist es sinnvoll, die Aktivierung des Elektrogeräts 100 beziehungsweise die Ansteuerung der Leistungselektronik auch dann zu unterdrücken, wenn durch weiteres Einschieben des Batteriepaket 200 in die Aufnahmeeinrichtung 170 schließlich auch die Kontaktelemente der beiden Kommunikationsschnittstellen 110, 210 miteinander in Kontakt kommen. Die Figur 5 zeigt eine entsprechende Situation, bei der das Batteriepaket 200 vollständig in die Aufnahmeeinrichtung 170 eingeschoben wurde. Um den Betrieb aufzunehmen, muss die Steuereinrichtung 150 entriegelt werden. Dies kann beispielsweise durch ein erneutes Betätigen des Hauptschalters 41 erfolgen. Je nach Anwendung kann es sinnvoll sein, weitere Maßnahmen zur Verzögerung des Aufbaus beziehungsweise des Herstellens der Kommunikationsverbindung vorzusehen. So kann beispielsweise eine zusätzliche mechanische Verzögerung implementiert werden, mittels derer die notwendige Zeit zum Booten des Mikroprozessors unabhängig von der Einschubgeschwindigkeit des Batteriepakets gewährleistet wird. In diesem Zusammenhang ist auch eine mechanische Freigabeeinrichtung für die Kontaktelemente einer Kommunikationsschnittstelle 120, 220 möglich. Mithilfe dieser Freigabeeinrichtung (hier nicht gezeigt) werden einzelne beziehungsweise sämtliche Kontaktelemente der entsprechenden Kommunikationsschnittstelle 120, 220 mit mechanischen Mitteln blockiert und erst nach der Kontaktierung der Hauptkontakte zum Kontaktieren freigegeben.

Aber auch mit elektronischen Mitteln lässt sich eine entsprechende Verzögerung beim Aufbau der Kommunikationsverbindung realisieren. So ist beispielsweise mithilfe einer elektrischen Freigabeeinrichtung, die den Stromkreis eines oder mehrerer Kontaktelemente einer der beiden Kommunikationsschnittstellen 120, 220 unterbricht und den Stromkreis erst nach der Kontaktierung der Hauptkontakte wieder schließt, eine zusätzliche Verzögerung beim Herstellen der Kommunikationsverbindung möglich. Eine solche elektrische Freigabe lässt sich beispielsweise mithilfe eines Schalters im Stromkreis der Kommunikationsverbindung realisieren. Dieser kann dabei beispielsweise mittels des Verriegelungsmechanismus zur Sicherung des Batteriepakets 200 in der Aufnahmeeinrichtung 170 betätigt werden.

Die hier beschriebenen Freigabeeinrichtungen können dabei sowohl in Elektrogerät 100 als auch im Batteriepaket 200 realisiert werden.

Die folgenden Figuren 6 bis 8 zeigen weitere mögliche Ausführungsbeispiele für die Gestaltung der Kontaktelemente der beiden Kontakteinrichtungen 101, 201, um eine Verzögerung beim Aufbau der beiden elektrischen Verbindungen 301, 302 zwischen Elektrogerät 100 und Batteriepaket 200 zu erreichen. Dabei sind in der in der **Figur 6** gezeigten Anordnung lediglich bei der batterieseitigen Kontakteinrichtung 201 die Kontaktelemente der Kommunikationsschnittstelle 220 gegenüber den zugehörigen Hauptkontakten 211, 212 der Stromschnittstelle 210 kürzer ausgebildet. Die Kontaktelemente der geräteseitigen Kontakteinrichtung 101 sind hingegen gleich lang ausgebildet, so dass sich eine gemeinsame Kontaktlinie c₁ ergibt. Analog hierzu können auch lediglich die Kontaktelemente der geräteseitigen Kontakteinrichtung 101 erfindungsgemäß modifiziert werden, während die Kontaktelemente der batterieseitigen Kontakteinrichtung 201 eine gemeinsame Kontaktlinie aufweisen.

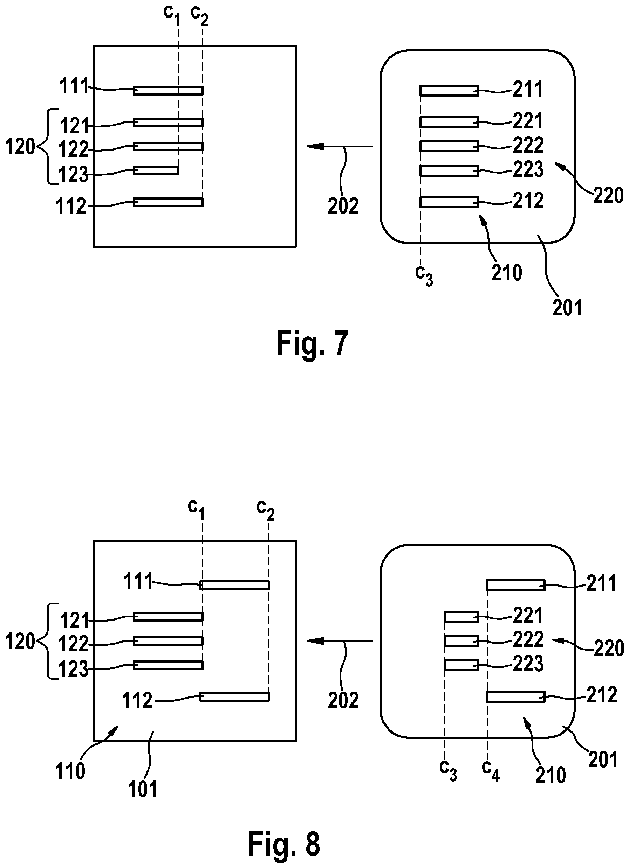

Ein solcher Fall ist in der **Figur 7** gezeigt. Im Unterschied zu der geräteseitigen Kontakteinrichtung aus der Figur 3 ist im vorliegenden Ausführungsbeispiel lediglich einer von drei Kontaktelementen der Kommunikationsschnittstelle 120 kürzer ausgebildet. Hierdurch soll verdeutlicht werden, dass nicht sämtliche Kontaktelemente der Kommunikationsschnittstelle 120 modifiziert werden müssen, um eine sichere Detektion des Installationsvorgangs zu ermöglichen.

Da in den beiden beispielhaften Kontaktanordnungen der Figuren 6 und 7 die Kontakteinrichtung 101, 102 bei lediglich einem der beiden Verbindungspartner Elektrogerät 100 oder Batteriepaket 200 modifiziert wird, ist es möglich das komplette Schutzsystem 102 in den jeweiligen Verbindungspartner 100, 200 unterzubringen. Hierdurch kann eine Kompatibilität zu bestehenden Maschinen beziehungsweise Batteriepaketen realisiert werden. So kann einerseits ein Elektrogerät 100, welches eine entsprechend ausgebildete Steuereinrichtung 150 sowie eine erfindungsgemäß modifizierte Kontakteinrichtung 101 umfasst, auch mit herkömmlichen Batteriepaketen erfindungsgemäß betrieben werden. Andererseits kann ein Batteriepaket 200, welches eine entsprechende Steuereinrichtung sowie eine erfindungsgemäß ausgebildete Kontakteinrichtung 201 aufweist, mit herkömmlichen Elektrogeräten in Sinne der Erfindung zusammenarbeiten.

Neben den in den vorhergehenden Figuren 3 bis 7 gezeigten unterschiedlich lang gestalteten Kontaktelementen ist eine Verzögerung beim Aufbau der Kommunikationsverbindung 302 auch durch eine Verschiebung der Kontaktelemente auf einer zur Einschubrichtung 202 parallelen Achse möglich. Die **Figur 8** zeigt beispielhaft eine erfindungsgemäße Kontaktanordnung, bei der die gewünschte Verzögerung sowohl durch eine Variation der Kontaktelementlänge als auch durch eine unterschiedliche Positionierung der Kontaktelemente realisiert ist.

Die anhand der Figuren erläuterten Ausführungsformen stellen lediglich bevorzugte beziehungsweise beispielhafte Ausgestaltungen der Erfindung dar. Neben den beschriebenen und abgebildeten Ausführungsformen sind weitere Ausführungsformen vorstellbar, welche weitere Abwandlungen sowie Kombinationen von Merkmalen umfassen können. Insbesondere kann es sich bei den hier dargestellten Kontaktelementen um beliebige Kontakte, wie zum Beispiel Gleit-, Schleif- oder Steckkontakte handeln. Auch die Anzahl der Kontaktelemente einer Schnittstelle ist hier nur beispielhaft offenbart. Ferner umfasst der hier verwendete Begriff "Batteriepaket" neben üblichen Batterien und so genannten Akkupacks auch sämtliche Formen von wechselbaren Energieversorgungsquellen, wie z. B. Brennstoffzellen.

## Patentansprüche

1. Schutzsystem (102) für ein mittels eines installierbaren Batteriepakets (200) betriebenes Elektrogerät (100) umfassend eine Steuereinrichtung (150),
wobei die Steuereinrichtung (150) ausgebildet ist, das Elektrogerät (100) zu aktivieren, sofern ein Hauptschalter (140) bei installiertem Batteriepaket (200) betätigt wird, und
wobei eine Kontakteinrichtung (101) des Elektrogeräts (100) und eine Kontakteinrichtung (201) des Batteriepakets (200) zueinander komplementäre Kontaktelemente (111, 112, 121, 122, 123, 211, 212, 221, 222, 223) umfassen, die jeweils eine erste Schnittstelle (110, 210) zum Herstellen einer Stromverbindung (301) zwischen Elektrogerät (100) und Batteriepaket (100) und eine zweite Schnittstelle (120, 220) zum Herstellen einer Kommunikationsverbindung (302) zwischen Elektrogerät (100) und Batteriepaket (100) bilden, wobei die Kontakteinrichtungen (101, 201) ausgebildet sind, beim Installieren des Batteriepakets (200) die Stromverbindung (301) zeitlich vor der Kommunikationsverbindung (302) herzustellen, **dadurch gekennzeichnet, dass** die Steuereinrichtung (150) ausgebildet ist, die Aktivierung des Elektrogeräts (100) zu unterdrücken, sofern bei betätigtem Hauptschalter (140) die Stromverbindung (301) zeitlich vor der Kommunikationsverbindung (302) hergestellt wird.

2. Schutzsystem (102) nach Anspruch 1,
**dadurch gekennzeichnet,**
**dass** die Steuereinrichtung (150) ausgebildet ist, das Elektrogerät (100) zu deaktivieren, sofern bei betätigtem Schalter (140) die Kommunikationsverbindung (302) zeitlich vor der Stromverbindung (301) getrennt wird.

3. Schutzsystem (102) nach Anspruch 1 oder 2,
**dadurch gekennzeichnet,**
**dass** wenigstens ein Kontaktelement (121, 122, 123, 221, 222, 223) der zweiten Schnittstelle (120, 220) einer Kontakteinrichtung (101, 201) gegenüber den Kontaktelementen (111, 112, 211, 212) der ersten Schnittstelle (110, 210) der jeweiligen Kontakteinrichtung (101, 201) in Einsteckrichtung (202) des Batteriepakets (200) räumlich versetzt angeordnet ist.

4. Schutzsystem (102) nach einem der Ansprüche 1 bis 3,
**dadurch gekennzeichnet,**
**dass** wenigstens ein Kontaktelement (121, 122, 123, 221, 222, 223) der zweiten Schnittstelle (120, 220) einer Kontakteinrichtung (101, 201) kürzer als die Kontaktelemente (111, 112, 211, 212) der ersten Schnittstelle (110, 210) der entsprechenden Kontakteinrichtung (101, 201) ausgebildet ist.

5. Schutzsystem (102) nach einem der vorhergehenden Ansprüche,
**dadurch gekennzeichnet,**
**dass** eine mechanische Verzögerungseinrichtung vorgesehen ist, die ausgebildet ist, den Aufbau der zweiten elektrischen Verbindung (302) beim Installieren des Batteriepakets (200) zeitlich zu verzögern.

6. Schutzsystem (102) nach einem der vorhergehenden Ansprüche,
**dadurch gekennzeichnet,**
**dass** eine mechanische Freigabeeinrichtung vorgesehen ist, die wenigstens ein Kontaktelement (121, 122, 123, 221, 222, 223) der zweiten Schnittstelle (120, 220) einer Kontakteinrichtung (101, 201) mechanisch blockiert, sobald das Batteriepaket (200) deinstalliert wird,
wobei die mechanische Freigabeeinrichtung ausgebildet ist, das blockierte Kontaktelement (121, 122, 123, 221, 222, 223) zeitlich verzögert nach dem Herstellen der ersten elektrischen Verbindung (301) freizugeben.

7. Schutzsystem (102) nach einem der vorhergehenden Ansprüche,
**dadurch gekennzeichnet,**
**dass** eine elektrische Freigabeeinrichtung vorgesehen ist, die wenigstens ein Kontaktelement (121, 122, 123, 221, 222, 223) der zweiten Schnittstelle (120, 220) einer Kontakteinrichtung (101, 201) elektrisch blockiert, sobald das Batteriepaket (200) deinstalliert wird,
wobei die elektrische Freigabeeinrichtung ausgebildet ist, das blockierte Kontaktelement (121, 122, 123, 221, 222, 223) zeitlich verzögert nach dem Herstellen der ersten elektrischen Verbindung (301) freizugeben.

8. Schutzsystem (102) nach Anspruch 7,
**dadurch gekennzeichnet,**
**dass** die elektrische Freigabeeinrichtung wenigstens einen Schalter umfasst, der den Stromkreis der zweiten elektrischen Verbindung (302) beim Deinstallieren des Batteriepakets (200) unterbricht.

9. Schutzsystem (102) nach Anspruch 8,
**dadurch gekennzeichnet,**
**dass** der Schalter mithilfe eines Verriegelungsmechanismus (180) betätigbar ist, mit dessen Hilfe das Batteriepaket (200) am Gehäuse (130) des Elektrogeräts (100) gesichert wird.

10. Schutzsystem (102) nach einem der vorhergehenden Ansprüche,
**dadurch gekennzeichnet,**
**dass** die Steuereinrichtung (150) ausgebildet ist, das Elektrogerät (100) zu aktivieren, sofern der Hauptschalter (140) erneut betätigt wird, nachdem die Aktivierung des Elektrogeräts (100) beim Installieren des Batteriepakets (200) unterdrückt wurde.

11. Elektrogerät (100) mit einem Schutzsystem (102) nach einem der vorhergehenden Ansprüche 1 bis 10.

12. Batteriepaket (200) mit einem Schutzsystem (102) nach einem der vorhergehenden Ansprüche 1 bis 10.

## Claims

1. Protection system (102) for an electrical appliance (100) which can be operated by means of an installable battery pack (200), comprising a control device (150),
wherein the control device (150) is designed to activate the electrical appliance (100) if a main switch (140) is operated with the battery pack (200) installed, and
wherein a contact device (101) of the electrical appliance (100) and a contact device (201) of the battery pack (200) comprise mutually complementary contact elements (111, 112, 121, 122, 123, 211, 212, 221, 222, 223) which in each case form a first interface (110, 210) for establishing an electrical connection (301) between the electrical appliance (100) and the battery pack (100) and a second interface (120, 220) for establishing a communication connection (302) between the electrical appliance (100) and the battery pack (100),
wherein the contact devices (101, 201) are designed, with the battery pack (200) installed, to establish the electrical connection (301) before the communication connection (302), **characterized in that** the control device (150) is designed to suppress the activation of the electrical appliance (100) if, with the main switch (140) operated, the electrical connection (301) is established before the communication connection (302).

2. Protection system (102) according to Claim 1,
**characterized**
**in that** the control device (150) is designed to deactivate the electrical appliance (100) if, with the switch (140) operated, the communication connection (302) is disconnected before the electrical connection (301).

3. Protection system (102) according to Claim 1 or 2,
**characterized**
**in that** at least one contact element (121, 122, 123, 221, 222, 223) of the second interface (120, 220) of a contact device (101, 201) is arranged spatially offset in relation to the contact elements (111, 112, 211, 212) of the first interface (110, 210) of the respective contact device (101, 201) in the insertion direction (202) of the battery pack (200).

4. Protection system (102) according to one of Claims 1 to 3,
**characterized**
**in that** at least one contact element (121, 122, 123, 221, 222, 223) of the second interface (120, 220) of a contact device (101, 201) is designed to be shorter than the contact elements (111, 112, 211, 212) of the first interface (110, 210) of the corresponding contact device (101, 201).

5. Protection system (102) according to one of the preceding claims,
**characterized**
**in that** a mechanical delay device is provided which is designed to delay the set-up of the second electrical connection (302) during the installation of the battery pack (200).

6. Protection system (102) according to one of the preceding claims,
**characterized**
**in that** a mechanical release device is provided which mechanically blocks at least one contact element (121, 122, 123, 221, 222, 223) of the second interface (120, 220) of a contact device (101, 201) as soon as the battery pack (200) is removed,
wherein the mechanical release device is designed to release the blocked contact element (121, 122, 123, 221, 222, 223) with a time delay after the first electrical connection (301) is established.

7. Protection system (102) according to one of the preceding claims,
**characterized**
**in that** an electrical release device is provided which electrically blocks at least one contact element (121, 122, 123, 221, 222, 223) of the second interface (120, 220) of a contact device (101, 201) as soon as the battery pack (200) is removed,
wherein the electrical release device is designed to release the blocked contact element (121, 122, 123, 221, 222, 223) with a time delay after the first electrical connection (301) is established.

8. Protection system (102) according to Claim 7,
**characterized**
**in that** the electrical release device comprises at least one switch which interrupts the electrical circuit of the second electrical connection (302) when the battery pack (200) is removed.

9. Protection system (102) according to Claim 8,
**characterized in that**
the switch can be operated with the aid of a locking mechanism (180) with the aid of which the battery pack (200) is secured to the housing (130) of the electrical appliance (100).

10. Protection system (102) according to one of the preceding claims,
**characterized**
**in that** the control device (150) is designed to activate the electrical appliance (100) if the main switch (140) is operated again after activation of the electrical appliance (100) was suppressed during installation of the battery pack (200).

11. Electrical appliance (100) comprising a protection system (102) according to one of the preceding Claims 1 to 10.

12. Battery pack (200) comprising a protection system (102) according to one of the preceding Claims 1 to 10.

## Revendications

1. Système de protection (102) pour un appareil électrique (100) qui fonctionne au moyen d'un bloc de batteries (200) installable, comprenant un dispositif de commande (150), le dispositif de commande (150) étant configuré pour activer l'appareil électrique (100) pour autant qu'un interrupteur général (140) est activé au niveau du bloc de batteries (200) installé, et
un dispositif de contact (101) de l'appareil électrique (100) et un dispositif de contact (201) du bloc de batteries (200) comprenant des éléments de contact (111, 112, 121, 122, 123, 211, 212, 221, 222, 223) mutuellement complémentaires, lesquels forment respectivement une première interface (110, 210) servant à établir une connexion électrique (301) entre l'appareil électrique (100) et le bloc de batteries (100) et une deuxième interface (120, 220) servant à établir une connexion de communication (302) entre l'appareil électrique (100) et le bloc de batteries (100),
les dispositifs de contact (101, 201) étant configurés pour, lors de l'installation du bloc de batteries (200), établir la connexion électrique (301) chronologiquement avant la connexion de communication (302),
**caractérisé en ce que** le dispositif de commande (150) est configuré pour inhiber l'activation de l'appareil électrique (100) pour autant que lorsque l'interrupteur général (140) est activé, la connexion électrique (301) est établie chronologiquement avant la connexion de communication (302).

2. Système de protection (102) selon la revendication 1, **caractérisé en ce que** le dispositif de commande (150) est configuré pour désactiver l'appareil électrique (100) pour autant que lorsque l'interrupteur (140) est activé, la connexion de communication (302) est déconnectée chronologiquement avant la connexion électrique (301).

3. Système de protection (102) selon la revendication 1 ou 2, **caractérisé en ce qu'**au moins un élément de contact (121, 122, 123, 221, 222, 223) de la deuxième interface (120, 220) d'un dispositif de contact (101, 201) est disposé décalé dans l'espace par rapport aux éléments de contact (111, 112, 211, 212) de la première interface (110, 210) du dispositif de contact (101, 201) respectif dans le sens de l'enfichage (202) du bloc de batteries (200).

4. Système de protection (102) selon l'une des revendications 1 à 3, **caractérisé en ce qu'**au moins un élément de contact (121, 122, 123, 221, 222, 223) de la deuxième interface (120, 220) d'un dispositif de contact (101, 201) est configuré plus court que les éléments de contact (111, 112, 211, 212) de la première interface (110, 210) du dispositif de contact (101, 201) correspondant.

5. Système de protection (102) selon l'une des revendications précédentes, **caractérisé par** la présence d'un dispositif de temporisation mécanique qui est configuré pour retarder dans le temps l'établissement de la deuxième connexion électrique (302) lors de l'installation du bloc de batteries (200).

6. Système de protection (102) selon l'une des revendications précédentes, **caractérisé par** la présence d'un dispositif de libération mécanique qui bloque mécaniquement au moins un élément de contact (121, 122, 123, 221, 222, 223) de la deuxième interface (120, 220) d'un dispositif de contact (101, 201) dès que le bloc de batteries (200) est désinstallé,
le dispositif de libération mécanique étant configuré pour libérer l'élément de contact (121, 122, 123, 221, 222, 223) bloqué avec un retard dans le temps après l'établissement de la première connexion électrique (301).

7. Système de protection (102) selon l'une des revendications précédentes, **caractérisé par** la présence d'un dispositif de libération électrique qui bloque électriquement au moins un élément de contact (121, 122, 123, 221, 222, 223) de la deuxième interface (120, 220) d'un dispositif de contact (101, 201) dès que le bloc de batteries (200) est désinstallé,
le dispositif de libération électrique étant configuré pour libérer l'élément de contact (121, 122, 123, 221, 222, 223) bloqué avec un retard dans le temps après l'établissement de la première connexion électrique (301).

8. Système de protection (102) selon la revendication 7, **caractérisé en ce que** le dispositif de libération électrique comprend au moins un interrupteur qui interrompt le circuit électrique de la deuxième connexion électrique (302) lors de la désinstallation du Système de protection (102) selon l'une des revendications précédentes, **caractérisé par** la présence d'un dispositif de libération électrique.

9. Système de protection (102) selon la revendication 8, **caractérisé en ce que** l'interrupteur peut être actionné à l'aide d'un mécanisme de verrouillage (180) à l'aide duquel le bloc de batteries (200) est fixé au boîtier (130) de l'appareil électrique (100).

10. Système de protection (102) selon l'une des revendications précédentes, **caractérisé en ce que** le dispositif de commande (150) est configuré pour activer l'appareil électrique (100) pour autant que l'interrupteur principal (140) est de nouveau activé après avoir inhibé l'activation de l'appareil électrique (100) lors de l'installation du bloc de batteries (200).

11. Appareil électrique (100) comprenant un système de protection (102) selon l'une des revendications 1 à 10.

12. Bloc de batteries (200) comprenant un système de protection (102) selon l'une des revendications 1 à 10.
